# NEUE EUROPÄISCHE PATENTSCHRIFT

(11) **EP 1 980 158 B3**
(45) Veröffentlichungstag dieser Patentschrift: **16.03.2016**
(45) Hinweis auf die Patenterteilung: 26.05.2010
(21) Anmeldenummer: 07007219.4
(22) Anmeldetag: 05.04.2007
(51) Int. Cl.: A23L 1/015, A23L 1/217

(54) **Verfahren zum Entfernen von acrylamid- und/oder melanoidin-bildenden Zellinhaltsstoffen aus stärkehaltigem pflanzlichen Material, sowie pflanzliches Material mit verringertem Gehalt an Acrylamid und/oder Melanoidinen**
Method for removing acrylamide and/or melanoidin creating contents of cells in starchy plant material and plant material with a low content of acrylamide and/or melanoidins
Procédé de traitement de matières cellulaires formant de l'acrylamide et/ou de la mélanoïdine de matériau végétal féculent, tout comme matériau végétal doté de la teneur amoindrie en acrylamide et/ou mélanoïdines

(43) Veröffentlichungstag der Anmeldung: 15.10.2008
(73) Patentinhaber: Intersnack Knabber-Gebäck GmbH & Co. KG, 50858 Köln (DE)
(72) Erfinder: Ulrich, Bernhard, 41515 Grevenbroich (DE); Haferkamp, Reiner, 41515 Grevenbroich (DE); Kern, Martin, 68753 Waghäusel (DE)
(74) Vertreter: Becker Kurig Straus

(56) Entgegenhaltungen:
- DE-A1- 10 260 983
- DE-A1-102004 028 782
- DE-A1-102005 029 414
- DE-B4-102004 013 762
- US-A1- 2003 219 518
- US-A1- 2004 101 607
- US-A1- 2004 224 066
- US-A1- 2006 106 210
- DATABASE COMPENDEX [Online] ENGINEERING INFORMATION, INC., NEW YORK, NY, US; ESHTIAGHI M N ET AL: "High electric field pulse pretreatment: Potential for sugar beet processing" XP002337397 Database accession no. E2002116885133 & J FOOD ENG; JOURNAL OF FOOD ENGINEERING MAY 2002, Bd. 52, Nr. 3, Mai 2002 (2002-05), Seiten 265-272,
- HOFFMANN J: "Wie kommt der Zucker aus der Rübe" INTERNET CITATION, [Online] 13. Dezember 2002 (2002-12-13), XP002276912 Gefunden im Internet: URL:http://home.arcor.de/ro/robertvandyk/r uebe1.doc>

## Beschreibung

### Gebiet der Erfindung

Die vorliegende Erfindung betrifft ein Verfahren zum Entfernen von Acrylamid- und/oder Melanoidin-bildenden Zellinhaltsstoffen, wie z. B. von Asparagin, Glucose und Fructose, aus Wurzelknollen von Solanum tuberosum ohne dass dabei eine wesentliche Menge der Stärke durch späteres Waschen aus den Zellen entfernt werden kann sowie mittels dieses Verfahrens herstellbare Wurzelknollen von Solanum tuberosum mit verringerter Menge an Acrylamid- und/oder Melanoidin-bildenden Zellinhaltsstoffen. Die Erfindung betrifft weiterhin Knabberprodukte bzw. -snacks bzw. Kartoffelprodukte mit verringerter Menge an Acrylamid und/oder Melanoidinen, welche aus den zuvor erwähnten Wurzelknollen von Solanum tuberosum herstellbar sind, sowie eine Vorrichtung zur Herstellung dieser Knabberprodukte bzw. -snacks bzw. Kartoffelprodukte.

### Stand der Technik

Die Herstellung von Kartoffelknabberprodukten wie beispielsweise Kartoffelchips ist im Stand der Technik gut bekannt. Diese erfolgt, indem Kartoffelknollen geschält, gewaschen, zerkleinert und schließlich einem Frittier- oder Trocknungsverfahren unterworfen werden. Während die Braunfärbung der Kartoffelprodukte im Frittier- oder Trocknungsverfahren schon immer ein Problem darstellte, wird seit einiger Zeit auch die Bildung von Acrylamid in diesen Verfahren als gesundheitlich problematisch angesehen.

Acrylamidbildung wird überwiegend durch die Maillard-Reaktion bei Vorliegen von freien Aminosäuren und reduzierenden Zuckern im Zellverband unter hohen Temperaturen verursacht, beispielsweise beim Frittieren oder Trocknen von Pflanzenmaterial, und wird oft von einer Braunfärbung des erhitzten Materials unter Bildung von Melanoidinen als braunen Farbstoffen begleitet. Ein spezifischer Reaktionspfad innerhalb der Maillard-Reaktion führt zum Endprodukt Acrylamid. Als die wichtigsten Ausgangsstoffe für die Bildung von Acrylamid wurden die Aminosäure Asparagin und die Monosaccharide Glucose und Fructose gefunden, welche auch in die Bildungsreaktion von Melanoidinen eingehen. Diese Stoffe liegen in gelöster Form überwiegend in intakten Pflanzenzellen vor. Ihre Konzentration hängt von vielen Faktoren ab, wie u.a. von Sorte, biologischer Aktivität, Reife, klimatischen und bodentechnischen Bedingungen, Düngung, Emtezeitpunkt, Lagerungsatmosphäre und -temperaturen der Pflanzen (C. Gertz, S. Klostermann, Eur. J. Lipid Sci. Technol. 2002, 104, 762 - 771; A. Becalski et al. J. Agric. Food Chem. 2003, 51, 802 - 808; D. V. Zyzak et al. J. Agric. Food Chem. 2003, 51, 4782 - 4787; F. Escher et al. J. Agric. Food Chem. 2006, 54, 5910 - 5916).

Hersteller von Kartoffelprodukten, insbesondere von Chips, sind bei erhöhten Zuckergehalten in Kartoffeln, welche besonders am Ende der Lagerperiode und in Ernteperioden mit ungünstigen Witterungsbedingungen auftreten, häufig gezwungen, das Blanchier-Verfahren einzusetzen, um einer Braunfärbung der Kartoffelchips und einer möglichen Acrylamid-Bildung entgegenzuwirken.

Blanchieren bewirkt durch thermische Einwirkung (Temperaturen um 82°C) ein weit reichendes Aufplatzen der Zellstrukturen, so dass der Zellinhalt austreten kann. Sobald sich die Zellen öffnen kommt es zu einem Austausch von Zellinhalt und umgebendem flüssigen Medium nach den Regeln der Diffusion. Bei höheren Konzentrationen an gelösten Stoffen in den Zellen erfolgt ein Stoffaustausch in Richtung Wasch-/Blanchiermedium. Je nach Blanchier- und Waschverfahren erfolgt eine Auslaugung bereits im Blancheur und/oder in nach geschalteten Waschstufen. Das effektive Konzentrationsgefälle hängt maßgeblich vom gewählten Blanchier- und Waschverfahren und den Prozessbedingungen ab. Je höher das Konzentrationsgefälle, desto höher ist der Auswascheffekt.

Die Vorteile der effektiven Verminderung der Zucker- und Aminosäuregehalte der bekannten Blanchierverfahren sind jedoch nur mit erheblichen Nachteilen zu erhalten.

Die Auslaugung erfolgt, was den Stoffaustausch betrifft, weitgehend unspezifisch. Das bedeutet, dass die Zellen nicht nur die störenden Zucker- und Aminosäureanteile verlieren, sondern auch andere erwünschte Zellinhaltsstoffe, wie beispielsweise Stärke und komplexe Stoffverbindungen, die beim nachfolgenden Frittieren oder Trocknen zur Aromabildung beitragen.

Das Blanchieren wirkt sich äußerst negativ auf die sensorische Qualität der Endprodukte aus. Da die Zellmembranen durch thermische Verfahren zerstört werden, gehen große Mengen Stärke/Trockensubstanz über das Blanchier- und Waschwasser verloren. Diese verloren gegangene Stärke steht nachfolgend für die Strukturbildung nicht mehr zur Verfugung. Die in den Zellen verbleibende Stärke beginnt darüber hinaus zu gelatinisieren. Weiter verursacht die Wärme eine Auflösung von Zellgerüstsubstanzen und damit eine zusätzliche Lockerung des Zellverbandes. All diese negativen Vorgänge bewirken, dass beispielsweise Chips aus blanchierten Kartoffelscheiben extrem weich, elastisch, pappig und geschmacklich ungenügend sind.

Bei der Verarbeitung von Kartoffeln geht in mehreren Prozessstufen Trockensubstanz verloren. Ein Teil der Trockensubstanzverluste findet bereits beim Schälen und Schneiden statt, da durch die Messerklingen bereits viele Zellen zerstört werden, aus denen nachfolgend die Stärke beim Waschen verloren geht. Darüber hinaus ist das herkömmliche Blanchierverfahren sehr unwirtschaftlich. Wie oben beschrieben geht auch während des Blanchierens eine große Menge wertvoller Pflanzensubstanz über das Abwasser verloren. Das Verhältnis der notwendigen Menge Rohware zur Menge Fertigware ist im Vergleich zu einem Verfahren ohne Blanchieren erheblich höher. Zur Aufrechterhaltung eines günstigen Konzentrationsgefälles ist eine große Frischwassermenge notwendig, die auf Blanchiertemperaturen gebracht und gehalten werden muss, was wiederum einen hohen Energieaufwand bedeutet. Darüber hinaus kann es an bestimmten Produktionsstandorten durch die großen Mengen mit Stärke belasteten Abwassers zu Problemen mit vorhandenen Kläranlagen kommen.

Ein Überblick über die gängigen Blanchierverfahren findet sich beispielsweise in Potato Business World 2003, Vol 11, Part 4, Seite 26 - 28:
Ein weiteres bekanntes Verfahren zum Behandeln von Pflanzen bzw. Pflanzenteilen ist die Elektroporation, mittels der wertgebende Inhaltsstoffe freigesetzt werden können.

Bei der Elektroporation werden durch die Wirkung kurzer Hochspannungs-Impulse (Bepulsung) intakte Zellen ohne nennenswerte Erwärmung geöffnet. Die auf die Zellen einwirkenden elektrischen Impulse erweitern die in den Zellmembranen vorhandenen Poren. Bis zu einem gewissen Spannungspotential verläuft diese Öffnung reversibel.

Dieser Effekt ist schon seit langem bekannt und findet beispielsweise in der Medizintechnik Anwendung.

Übersteigt das elektrische Potential an der Zellmembran einen Wert von 10 V, so öffnen sich die Poren irreversibel und die Zellflüssigkeit kann austreten. Diesem Effekt schenkt man aber erst seit wenigen Jahren Beachtung. Er wird überwiegend für die schonende Extraktion von Zellinhaltstoffen, wie beispielsweise Fruchtsäften, Zuckerrübensaft, sekundären Pflanzeninhaltsstoffen und Farbstoffen verwendet. Die Elektroporation wird üblicherweise in einer Prozessflüssigkeit, meist einem Wasserbad, durchgeführt.

Eine Vorrichtung zum Elektroporieren von pflanzlichem Prozessgut wird in der DE 10 2004 025 046 A1 beschrieben. Diese umfasst eine Energiequelle, die elektrisch biopolar aufgebaut ist und aus mindestens einem bipolaren Hochspannungspulsgenerator mit zwei Hochspannungsausgängen besteht. An sie sind die beiden feldbildenden Elektrodengruppen angeschlossen. Mehrere solche bipolaren Hochspannungspulsgeneratoren an einer solchen Einrichtung sind baugleich und mit einer Triggereinrichtung zum zeitbestimmten gleichzeitigen Zünden versehen. Die an den Ausgang eines Hochspannungspulsgenerators oder an den jeweiligen Ausgang der Hochspannungspulsgeneratoren angeschlossenen Lastkreise sind in ihrer komplexen Impedanz einander gleich. Im Falle, dass die Energiequelle aus mindestens zwei Hochspannungspulsgeneratoren besteht, sind dieselben während der Entladung durch die durch die Prozessflüssigkeit zwischen den Teilelektroden gebildeten elektrolytischen Widerstände voneinander elektrisch entkoppelt.

DE 10 2004 013 762 B4 beschreibt ein Verfahren zur schonender Freisetzung wertgebender Inhaltsstoffe aus Weintrauben, wobei die aus den Weintrauben gewonnene Maische der Elektroporation unterworfen wird, um Most zu erhalten, welcher für die Weinbereitung verwendet wird. Die Einrichtung zur Durchführung der Elektroporation der Maische besteht aus einer dielektrischen Rohrleitung, dem Strömungskanal für die Maische, in dessen Wand mindestens zwei zueinander auf Abstand stehende Elektroden zur Bildung eines pulsförmigen, elektrischen Feldes zwischen ihnen eingelassen ist. Die Maische hat als elektrolytische Last der Einrichtung einen elektrischen Widerstand, der höchstens so groß wie die Impedanz eines an die Einrichtung angeschlossenen Hochspannungsimpulsgenerators ist.

DE 10 2004 028 782 A1 offenbart ein Verfahren und eine Anlage zur verbesserten Gewinnung und Extraktion von Inhaltsstoffen aus Zuckerrüben mittels Elektroporation.

Ein weiteres Verfahren und eine Anlage zur verbesserten Gewinnung und Extraktion von Inhaltsstoffen aus Zuckerrüben mittels Elektroporation werden in der DE 102 60 983 A1 beschrieben.

Die DE 10 62 073 A1 offenbart ein Verfahren und eine Anlage zur verbesserten Gewinnung und Extraktion von Inhaltsstoffen aus Zichorien mittels Elektroporation.

### Kurze Beschreibung der Figuren

Figur 1 zeigt in allgemeiner Form die Veränderungen an einer pflanzlichen Zellmembran, die der Elektroporation unterworfen wird und den selektiven Stoffaustausch, der im erfindungsgemäßen Verfahren stattfindet.
Figur 2 zeigt eine schematische Darstellung einer Anlage mit verschiedenen Vorrichtungen zur Herstellung eines erfindungsgemäßen Knabberprodukts bzw. Snacks bzw. Kartoffelprodukts.

### Beschreibung der Erfindung

Aufgabe der vorliegenden Erfindung ist es, ein nicht thermisches Verfahren zum Entfernen von Acrylamid- und/oder Melanoidin-bildenden Zellinhaltsstoffen aus stärkehaltigem pflanzlichem Material, insbesondere aus Kartoffelknollen, bereitzustellen, mit welchem es möglich ist, eine einem Blanchierprozess vergleichbare Auslaugung zu erzielen, ohne dass eine wesentliche Menge der Stärke durch Waschen aus den Zellen entfernt werden kann und das wirtschaftlicher als der Blanchierprozess ist. Der Verlust von Stärke äußert sich in einem Trockensubstanzverlust.

Eine weitere Aufgabe der vorliegenden Erfindung besteht darin, pflanzliches Material mit verringerter Menge an Acrylamid- und/oder Melanoidin-bildenden Zellinhaltsstoffen bereitzustellen, welches mittels des erfindungsgemäßen Verfahrens herstellbar ist, sowie ein Knabberprodukt bzw. einen Snack mit verringertem Gehalt an Acrylamid und/oder Melanoidinen bereitzustellen, welches aus dem erfindungsgemäßen pflanzlichem Material mit verringerter Menge an Acrylamid- und/oder Melanoidin-bildenden Zellinhaltsstoffen herstellbar ist und eine bessere sensorische Qualität hat, als ein Knabberprodukt bzw. einen Snack bzw. ein Kartoffelprodukt, welches aus pflanzlichem Material hergestellt wurde, das zuvor einem Blachierprozess unterworfen wurde. Außerdem ist es Aufgabe der vorliegenden Erfindung, eine Vorrichtung bereitzustellen, welche die Herstellung des erfindungsgemäßen Knabberprodukts bzw. -snacks bzw. Kartoffelprodukts mit verringertem Gehalt an Acrylamid und/oder Melanoidinen erlaubt.

Diese Aufgabe wird erfindungsgemäß durch ein Verfahren zum Entfernen von Acrylamid- und/oder Melanoidin-bildenden Zellinhaltsstoffen aus Wurzelknollen von Solanum tuberosum, ohne dass dabei eine wesentliche Menge der Stärke durch Waschen aus den Zellen entfernt werden kann, gelöst, welches die Verfahrensschritte
- Bereitstellen der, vorzugsweise gewaschenen und geschälten, Wurzelknollen von Solanum tuberosum,
- irreversible Elektroporation derWurzelknollen von Solanum tuberosum, und
- Erhalten von Wurzelknollen von Solanum tuberosum mit verringerter
Menge an Acrylamid- und/oder Melanoidin-bildenden Zellinhaltsstoffen umfasst, und wobei die Wurzelknollen von Solanum tuberosum in weiteren Verfahrensschritten zu einem Knabberprodukt bzw. Snack bzw. einem Kartoffelprodukt weiterverarbeitet werden.

Der Waschverlust einer wesentlichen Menge Stärke äußert sich in einem Trockensubstanzverlust von weniger als 7 %, wenn die Wurzelknollen von Solanum tuberosum nach irreversibler Elektroporation der Wurzelknollen von Solanum tuberosum gewaschen werden.

Das zugrunde liegende Konzept der vorliegenden Erfindung ist die umgekehrte Nutzung des aus dem Stand der Technik bekannten Effekts der Elektroporation. Während die Extraktion und Gewinnung von Zellinhaltsstoffen unter Zerstörung und Verwerfung der Matrix bekannt ist, zielt die vorliegende Erfindung auf das Entfernen von unerwünschten Zellinhaltsstoffen unter optimaler Erhaltung der festen Zellstruktur.

Bei dem Acrylamid- und/oder Melanoidin-bildenden Zellinhaltsstoffen handelt es sich beispielsweise um mindestens eine Substanz aus der Gruppe, bestehend aus Asparagin, Glucose und Fructose.

Die Elektroporation erfolgt erfindungsgemäß bevorzugt in einem Elektroporationsreaktor zur kontinuierlichen Prozessierung von stückigen Produkten als Prozessgut in einer Prozessflüssigkeit mit elektrischen Impulsen, bestehend aus einer kreiszylindrischen Trommel aus Metall mit dielektrischem Überzug oder ganz aus dielektrischem Material, die um ihre horizontal liegende Zylinderachse/Rotationsachse mit 0,1 bis 4 Umdrehungen pro min umlaufend betreibbar ist, Mitnehmern aus dielektrischem Material auf der äußeren Mantelwand der Trommel, die darauf gleichverteilt um den Umfang angebracht sind, einem Gehäuse aus dielektrischem Material, das mit seiner Reaktorwand die Trommel mit ihren Mitnehmern bis auf einen oberhalb der Rotationsachse liegenden offenen Bereich berührungslos aber äquidistant umgibt, einer Entgasungszone, einer Reaktionszone im Spalt zwischen der Trommel und der Reaktorwand des Gehäuses sowie einer Zuführungszone und einer Austragszone, die von den Mitnehmern durchlaufen werden, einer Prozessgut-Aufgabevorrichtung, die als Produktvorlage bei konstantem Füllniveau dient und das stückige Prozessgut durch die Drehbewegung der kreiszylindrischen Trommel selbstständig tangential zu ihrer Oberfläche einzieht, einer Austragszone, die so gestaltet ist, dass ein Ausschnitt in der zylindrischen Reaktorwand, unter dem Niveau der Drehachse gelegen einen selbstständigen Austrag des Prozessgutes hervorruft, die obere Kante des Ausschnittes in der zylindrischen Reaktorwand gleichzeitig als Überlaufwehr für die Prozessflüssigkeit dient, die überlaufende Prozessflüssigkeit von dem jetzt prozessierte Prozessgut getrennt wird. Besonders bevorzugt ist mindestens ein Elektrodenpaar aus elektrisch gut leitendem, blank liegenden und gegenüber mechanischem und chemischem Verschleiß inertem Werkstoff gefertigt und in die seitlichen Wände des Gehäuses im Bereich der Reaktionszone in die Wand aus dielektrischem Material eingelassen, und durch den Anschluss mindestens eines unipolaren oder bipolaren elektrischen Pulsgenerators wird bzw. werden eine mit negativem oder positivem Potential gepulste Gleichspannung von bis zu 300 kV bei unipolarem Betrieb oder +150/ -150 kV bei bipolarem Betrieb angeschlossen.

Die Elektroporation wird vorzugsweise in einem Wasserbad mit einer Leitfähigkeit von 0,5 - 5 mS/cm, besonders bevorzugt von 1 - 2 mS/cm durchgeführt. Zwischen den Elektroden der Elektroporationsvorrichtung wird bevorzugt eine Potentialdifferenz von 50 - 300 kV, besonders bevorzugt eine Potentialdifferenz von 200 - 280 kV angelegt und bevorzugt eine Stromstärke von 2.000 bis 7.000 A eingestellt. Die Stromdichte in der Reaktionszone der Elektroporationsvorrichtung beträgt bevorzugt 50 - 450 kA/m², besonders bevorzugt 100 - 200 kA/m². Die Elektroporation wird vorzugsweise mit einer Impulsfrequenz von 1 bis 30 Hz, besonders bevorzugt von 15 bis 25 Hz und bei einer Pulsdauer der gepulsten elektrischen Energie von vorzugsweise 1 - 15 µsec, besonders bevorzugt von 2-6 µsec durchgeführt. Die spezifische Energieeinleitung beträgt bevorzugt 3 bis 10 kJ/kg Wurzelknollen von Solanum tuberosum, besonders bevorzugt 5 bis 7 kJ/kg Wurzelknollen von Solanum tuberosum.

Nachdem die Wurzelknollen von Solanum tuberosum der Elektroporation unterzogen wurde, können sie in einem weiteren Verfahrensschritt zerkleinert werden. Dies ist sehr einfach, da die Schnittfestigkeit des biologischen Materials durch Elektroporation verringert wird.

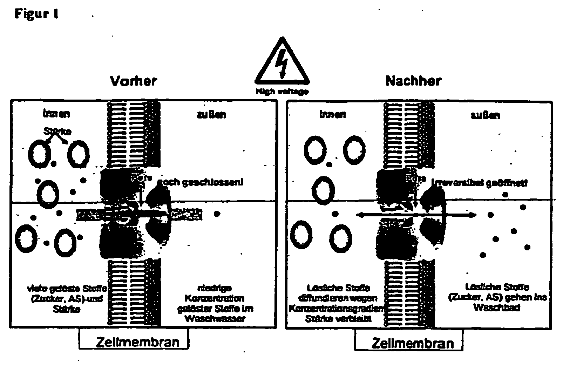

In einem weiteren Verfahrensschritt können vorzugsweise die geschnittenen Wurzelknollen von Solanum tuberosum dann in ein wässeriges Tauchbad, das Salze enthalten kann, oder in mehreren weiteren Verfahrensschritten nacheinander in mehrere Tauchbäder befördert werden, beispielsweise indem sie in das Tauchbad bzw. die Tauchbäder gepumpt oder geschwemmt wird. Durch ein Konzentrationsgefälle zwischen dem Zellinneren und dem Waschwasser kommt es zu dem gewünschten selektiven Stoffaustausch (siehe Figur 1). Die Zellflüssigkeit mit den gelösten Stoffen geht in das Waschwasser über. Dies umso besser, je größer das Konzentrationsgefälle im weiteren Verlauf des Auswaschprozesses erhalten wird. Optimal ist eine Verdünnungsreihe über zwei oder drei Tauchbäder, welche vorzugsweise im Gegenstrom betrieben werden. Es ist jedoch anzumerken, dass auch ohne die Verwendung von Tauchbädern ein, wenn auch geringerer, Austritt der Acrylamid- und/oder Melanoidin-bildenden Zellinhaltsstoffe auftritt. Die Wassertemperatur im Tauchbad beeinflusst den Prozess in dreierlei Weise:
1. Die erwünschte Diffusion nimmt mit steigender Temperatur zu.
2. Mit ansteigenden Temperaturen nehmen aber auch die unerwünschten enzymatischen Abbauvorgänge in den Zellen zu. Es entstehen dabei Vorprodukte, die später während der Lagerung zu geschmacklichen Abweichungen führten können.
3. Weiterhin nimmt mit steigenden Wassertemperaturen die mikrobiologische Belastung des Waschwassers zu, was unbedingt zu vermeiden ist.

Die Temperatur ist für die jeweilige Betriebssituation unter Berücksichtigung der genannten Einflüsse festzulegen und sollte zwischen 5°C und 30°C liegen.

Der Trockensubstanzverlust beim Waschen beträgt erfindungsgemäß maximal 7 % und ist damit geringer als der Trockensubstanzverlust im Blanchierverfahren gemäß dem Stand der Technik. Da der Trockensubstanzverlust beim Waschen ein Maß für den Stärkeverlust darstellt, ist der Stärkeverlust im erfindungsgemäßen Verfahren geringer als im herkömmlichen Blanchierverfahren.

In weiteren Verfahrensschritten werden die Wurzelknollen von Solanum tuberosum dann zu einem Knabberprodukt bzw. Snack bzw. Kartoffelprodukt weiterverarbeitet. Die vorherige Reduzierung der Acrylamid- und/oder Melanoidin-bildenden Stoffe führt zu einer deutlichen Reduzierung der Bildung von Acrylamid (um mindestens 30% reduziert) und/oder Melanoidinen in einem dazu notwendigen Frittier- bzw. Trocknungsprozess.

Ein weiterer Gegenstand der vorliegenden Erfindung sind Wurzelknollen von Solanum tuberosum mit verringerter Menge an Acrylamid- und/oder Melanoidin-bildenden Zellinhaltsstoffen gemäß einem der Ansprüche 12 bis 20.

Bei den Acrylamid- und/oder Melanoidin-bildenden Zellinhaltsstoffen handelt es sich beispielsweise um mindestens eine Substanz aus der Gruppe bestehend aus Asparagin, Glucose und Fructose.

Ein weiterer Gegenstand der vorliegenden Erfindung ist ein Knabberprodukt bzw. Snack bzw. Kartoffelprodukt mit einem um mindestens 30 % reduziertem Acrylamidgehalt bezogen auf ein Knabberprodukt bzw. einen Snack bzw. Kartoffelprodukt, welches bzw. welcher aus pflanzlichem Material der selben Art hergestellt wurde, das zuvor nicht der Elektroporation unterworfen wurde, welcher aus erfindungsgemäßen Wurzelknollen von Solanum tuberosum mit verringerten Menge an Acrylamid bildenden Zellinhaltsstoffen herstellbar ist. Hierbei kann es sich beispielsweise um Kartoffelchips handeln, deren Acrylamidgehalt bezogen auf Kartoffelchips, welche aus derselben Kartoffelsorte hergestellt wurden, um mindestens 30 % reduziert ist.

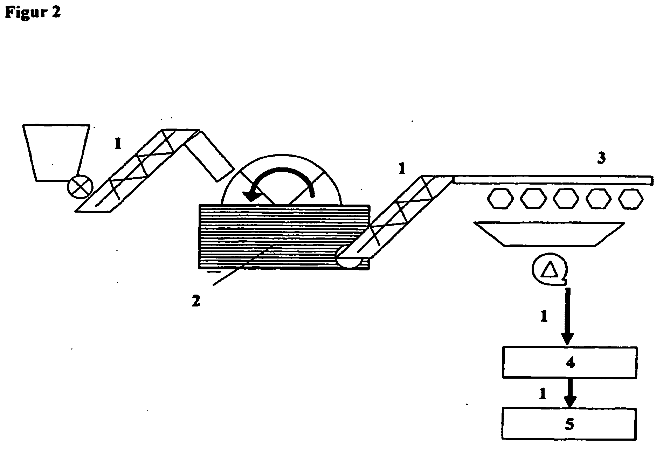

Figur 2 zeigt eine schematische Darstellung einer Vorrichtung zur Herstellung eines erfindungsgemäßen Knabberprodukts bzw. Snacks bzw. Kartoffelprodukts mit verringertem Gehalt an Acrylamid und/oder Melanoidinen, welche noch einen Gegenstand der vorliegenden Erfindung darstellt, umfassend
- Vorrichtungen zum Transport der Wurzelknollen von Solanum tuberosum (1),
- einen Elektroporationsreaktor (2),
- eine Schneidanlage (3),
- gegebenenfalls mindestens ein Tauchbad (4), und
- eine Friteuse (5).

Die folgenden Beispiele erklären die vorliegende Erfindung genauer ohne sie einzuschränken.

### Beispiele

Als Rohstoff kam bei allen Versuchseihen die Kartoffelsorte Lady Rosetta mit einer Trockensubstanz von 22 % zu Einsatz. Die verwendete Kartoffelpartie hatte bereits durch längere Lagerung erhöhte Zuckerwerte (Glukose: 0,078 g/100g; Fruktose: 0,0445 g/100g) und damit ein erhöhtes Acrylamidbildungspotential.

Die Kartoffeln wurde mittels einer herkömmlichen Schneideinheit aus der Produktion (Fa. Urschel) jeweils zeitnah in 1,2 mm dicke Scheiben geschnitten. Davon wurden für jeden Versuchslauf 1200 g Scheiben abgewogen und diese Charge dann standardisiert in einem Wasserbad gewaschen. Das Wasserbad umfasste 24 L. Das Wasser mit einer Temperatur wurde für jeden Versuch genau abgemessen und auf ca. 18 °C temperiert.

Für die Elektroporation wurden die Kartoffeln (Erfindung) als ganze Knollen in einem vertikal stehenden und mit Wasser befülltem Rohr behandelt.

Im Anschluss wurden die Knollen in gleicher Weise wie die Vergleichsproben verarbeitet.

Die abgewogenen 1200 g Scheiben wurden für 180 s gewaschen.

Vor und nach der Behandlung wurden Wasserproben genommen, um nachfolgend die Trockensubstanzverluste ermitteln zu können. Hierzu wurden die Trockensubstanzgehalte der Kartoffeln korrigiert, da die vorbehandelten Scheiben während der Verarbeitung ab dem Zeitpunkt des Schneidens Zellwasser abgegeben haben. Dies ist auch der Grund für die deutliche Zunahme der Härte der frittierten Chips. Dieser Effekt des Wasserverlustes kann bei einem kontinuierlichen Produktionsprozess über die Kontrolle der Verweilzeit außerhalb der Wasserbäder und -transporteinrichtungen zur Steuerung der Trockensubstanz und damit der Knusprigkeit der Produkte genutzt werden.

Nach schneller Entwässerung der Oberfläche wurden davon mehrere Chargen (jeweils 480g) standardisiert auf möglichst vergleichbare Restfeuchte bei einer Anfangstemperatur von 185°C frittiert.

Die fertigen Chips wurden auf Acrylamid und Sensorik untersucht. Für den Vergleich der Knusprigkeit (Härte) wurde ein firmen internes 5 Punkte Sensorik-Schema verwendet (1=zart; 5=hart).

Analytische Methoden:

| | |
|---|---|
| Trockensubstanz (TS): | Die Bestimmung der Trockenmassen erfolgte mittels Oberflächenverdampfer und belüftetem Wärmeschrank bei 105°C. |
| | Der Anteil gelöster Trockensubstanz wurde nach Abfiltration der ungelösten Substanz ermittelt. |
| Acrylamid: | Die Bestimmung erfolgte mittels LCMS: |
| | HPLC-System von Perkin Elmer Serie 200 |
| | |
| | HPLC-Säule : LiChroCART 250-4 Lichrospher CN 5µm 250mm x 4,6mm (Merck Bestell-Nr.: 1.50892.0001) |
| | |
| | LichroCART 4-4 10 Vorsäulenkartuschen Lichrospher 100 CN (5µm) (Merck Bestell-Nr.: 1.50959.0001) |
| | |
| | Eluent : Wasser/Acetonitril 99,5 : 0,5 v/v versetzt mit 0,1%(v/v) Ameisensäure (98%) |
| | |
| | isokratisch, Fluß 0,250ml/min |
| | |
| | Chemikalien: Wasser HPLC grade von Baker |
| | Acetonitril für.die HPLC Chromanorm von Prolabo |
| | Ameisemsäure 98-100% p.A (Merck). |
| | |
| | MS/MS- Bedingungen: |
| | |
| | API 2000 von Applied Biosystems, Darmstadt |
| | |
| | Modus : multi- reaktion monitoring (MRM) im positiven |
| | Elektronenspray -Ionisierungsmode (ESI+) |
| | Qualifier-Übergänge : |
| | Acrylamid m/z 72 zu72 und m/z 72 zu 52 |
| | Interner Standard D3-Acrylamid m/z 75 zu 75 und m/z 75 zu 58 |
| | |
| | Einstellungen der Turbolon Spray Quelle: |
| | Source Temperature 450°C |
| | Ion Source Gas 1 : 45.00 psi |
| | Ion Source Gas 2 : 60.00 psi |
| | Collision Gas 3.00 psi |
| | |
| | Ionenenergie IE1:0,5 V |
| | Ionenenergie IE3 : 1,3 V |
| | Dwell time 0,25 sec |
| | Resolution Q1: Unit |
| | Resolution Q2 : Unit |
| Härte: | Interne Vorschrift der Fa. Intersnack Knabbergebäck GmbH & Co. KG 5 Punkte Sensorik Schema |
| | Die frittierten Chipsproben werden blind verkostet und sind von den Verkostem bezüglich der Bisshärte in eine Rangfolge auf einer 5er Skala zu bringen. |
| | Dabei gilt die Skala: 1 = sehr zart bis 5 = sehr knusprig/hart. Beliebige Abstufungen in 0,1 Schritten sind erlaubt. |
| | Die ermittelten Werte aller Verkoster werden gemittelt. |

**Tabelle 1: Einzelwerte**

| ***Einzelwerte*** | **Vergleichsbeispiel 1** | **Vergleichsbeispiel 2** | **Beispiel 1** (Erfindung) | **Beispiel 2** (Erfindung) | **Beispiel 3** (Erfindung) |
|---|---|---|---|---|---|
| **spez. Energie [kJ/kg]** | - | - | 8 | 5,5 | 7,5 |
| **korrigierte Trockensubstanz [%]** | 22 | 22 | 27 | 27 | 27 |
| **Wassertemperatur [°C]** | 18,4 | 16,8 | 17,5 | 17,5 | 17,5 |
| **gesamte TS vorher [g/l]** | 0,385 | 0,385 | 0,385 | 0,385 | 0,385 |
| **gesamte TS nachher [g/l]** | 1,35 | 1,89 | 1,125 | 1,295 | 1,395 |
| **lösliche TS nachher [g/l]** | 0,475 | 0,405 | 0,66 | 0,625 | 0,68 |
| **Differenz gesamte TS [g/l]** | 0,965 | 1,505 | 0,74 | 0,91 | 1,01 |
| **Differenz lösliche TS [g/l]** | 0,09 | 0,02 | 0,275 | 0,24 | 0,295 |
| **Differenz unlösliche TS [g/l]** | 0,875 | 1,485 | 0,465 | 0,67 | 0,715 |
| **gesamter TS-Verlust auf Einwaage bezogen [%]** | 8,77 | 13,68 | 5,48 | 6,74 | 7,48 |
| **löslicher TS-Verlust auf Einwaage bezogen [%]** | **0,82** | **0,18** | **2,04** | **1,78** | **2,19** |
| **unlöslicher TS-Verlust auf Einwaage bezogen [%]** | **7,95** | **13,50** | **3,44** | **4,96** | **5,30** |
| **Acrylamid [µg/kg]** | **1380** | **1860** | **810** | **820** | **610** |
| **Härte [Skala 1-5]** | 2,5 | 2,5 | 5 | 4,7 | 5 |

| | | | | | |
|---|---|---|---|---|---|
| TS = Trockensubstanz | | | | | |

Bei Betrachtung der Mittelwerte, werden die Vorteile des erfindungsgemäßen Verfahrens deutlich sichtbar:

**Tabelle 2: Mittelwerte**

| ***Mittelwerte*** | **Vergleichs-beispiel 1** | **Vergleichs-beispiel 2** | **Beispiel** 1 (Erfindung) | **Beispiel** 2 (Erfindung) | **Beispiel** 3 (Erfindung) |
|---|---|---|---|---|---|
| **löslicher TS-Verlust auf Einwaage bezogen [%]** | **0,50** | | | **2,00** | |
| **unlöslicher TS-Verlust auf Einwaage bezogen [%]** | **10,73** | | | **4,57** | |
| **Acrylamid [µg/kg]** | **1620** | | | **747** | |
| **Härte* [Skala 1-5]** | **2,5** | | | **4,9** | |

| | | | | | |
|---|---|---|---|---|---|
| *Versuchsvorschrift der Fa. Intersnack Knabbergebäck GmbH & Co. KG | | | | | |

Die löslichen Substanzen (Reaktionspartner für die Maillard-Reaktion) werden in erwünschter Weise im Vergleich zu unbehandelten Scheiben um ein vierfaches ausgewaschen. Dies resultiert in einer Acrylamidreduktion von ca. 53 %, was üblicherweise durch Blanchieren erzielt werden kann. Gleichzeitig wird aber der unlösliche Trockensubstanzverlust (überwiegend Stärke) im Vergleich zum Standardprozess ohne Blanchieren um 57 % reduziert.

Diese Daten zeigen, dass die durch die erfindungsgemäß verwendete Elektroporation geöffneten Zellwandporen (ca. 30-40 nm nach Behandlung) nur gelöste Substanzen freigeben, die viel größeren Stärkekörner (ca. 15-100 µm; seltener auch bis 150 µm) jedoch in den Zellen verbleiben.

Das Blanchieren erhöht dagegen die Trockensubstanzverluste drastisch. Das erfindungsgemäße Verfahren vermeidet also nicht nur die erhöhten Verluste beim Blanchieren, sondern führt erstaunlicherweise auch noch zu einer Einsparung gegenüber dem Standardprozess ohne Blanchieren. Die Trockensubstanz verbleibt beim Waschen nun weitgehend in der Kartoffel, was die Ressourcen (Kartoffel, Frisch- und Abwasser, Energie) schont und die Herstellkosten senkt.

## Patentansprüche

1. Verfahren zum Entfernen von Acrylamid- und/oder Melanoidin-bildenden Zellinhaltsstoffen, insbesondere von Substanzen aus der Gruppe, bestehend aus Asparagin, Glucose und Fructose, aus Wurzelknollen von Solanum tuberosum, umfassend die Verfahrensschritte
- Bereitstellen der, vorzugsweise gewaschenen und geschälten, Wurzelknollen von Solanum tuberosum,
- irreversible Elektroporation der Wurzelknollen von Solanum tuberosum,
- Erhalten von Wurzelknollen von Solanum tuberosum mit verringerter Menge an Acrylamid- und/oder Melanoidin-bildenden Zellinhaltsstoffen,
- gegebenenfalls Zerkleinern der Wurzelknollen von Solanum tuberosum, und
- gegebenenfalls Waschen der Wurzelknollen von Solanum tuberosum, wobei die Wurzelknollen von Solanum tuberosum in mindestens ein oder mehrere Tauchbäder transportiert und dort gewaschen werden, wobei das mindestens eine Tauchbad vorzugsweise im Gegenstrom betrieben wird, wobei der Trockensubstanzverlust, der beim Waschen der Wurzelknollen von Solanum tuberosum in den Tauchbädern auftritt, 7 Gew.-% oder weniger beträgt,
- und gegebenenfalls Weiterverarbeiten der zerkleinerten und gewaschenen Wurzelknollen von Solanum tuberosum, und wobei
- die Wurzelknollen von Solanum tuberosum in weiteren Verfahrensschritten zu einem Knabberprodukt bzw. Snack bzw. einem Kartoffelprodukt weiterverarbeitet werden.

2. Verfahren nach Anspruch 1, **dadurch gekennzeichnet, dass** die Elektroporation in einem Elektroporationsreaktor zur kontinuierlichen Prozessierung von stückigen Produkten als Prozessgut in einer Prozessflüssigkeit mit elektrischen Impulsen erfolgt, bestehend aus einer kreiszylindrischen Trommel aus Metall mit dielektrischem Überzug oder ganz aus dielektrischem Material, die um ihre horizontal liegende Zylinderachse/Rotationsachse mit 0,1 bis 4 Umdrehungen pro min umlaufend betreibbar ist, Mitnehmern aus dielektrischem Material auf der äußeren Mantelwand der Trommel, die darauf gleichverteilt um den Umfang angebracht sind, einem Gehäuse aus dielektrischem Material, das mit seiner Reaktorwand die Trommel mit ihren Mitnehmern bis auf einen oberhalb der Rotationsachse liegenden offenen Bereich berührungslos aber äquidistant umgibt, einer Entgasungszone, einer Reaktionszone im Spalt zwischen der Trommel und der Reaktorwand des Gehäuses sowie einer Zuführungszone und einer Austragszone, die von den Mitnehmern durchlaufen werden, einer Prozessgut-Aufgabevorrichtung, die als Produktvorlage bei konstantem Füllniveau dient und das stückige Prozessgut durch die Drehbewegung der kreiszylindrischen Trommel selbstständig tangential zu ihrer Oberfläche einzieht, einer Austragszone, die so gestaltet ist, dass ein Ausschnitt in der zylindrischen Reaktorwand, unter dem Niveau der Drehachse gelegen einen selbstständigen Austrag des Prozessgutes hervorruft, die obere Kante des Ausschnittes in der zylindrischen Reaktorwand gleichzeitig als Überlaufwehr für die Prozessflüssigkeit dient, die überlaufende Prozessflüssigkeit von dem jetzt prozessierten Prozessgut getrennt wird.

3. Verfahren nach Anspruch 2 **dadurch gekennzeichnet, dass** die Elektroporation in einem Elektroporationsreaktor erfolgt, in dem mindestens ein aus elektrisch gut leitendem, blank liegenden und gegenüber mechanischem und chemischem Verschleiß inertem Werkstoff gefertigtes Elektrodenpaar in die seitlichen Wände des Gehäuses des verwendeten Elektroporationsreaktors im Bereich der Reaktionszone in die Wand aus dielektrischem Material eingelassen ist, wobei durch den Anschluss mindestens eines unipolaren oder bipolaren elektrischen Pulsgenerators eine mit negativem oder positivem Potential gepulste Gleichspannung von bis zu 300 kV bei unipolarem Betrieb oder +150/ -150 kV bei bipolarem Betrieb angeschlossen wird bzw. werden.

4. Verfahren nach einem der Ansprüche 1 bis 3, **dadurch gekennzeichnet, dass** die Elektroporation in einem Wasserbad mit einer spezifischen Leitfähigkeit von 0,5 - 5 mS/cm, bevorzugt 1 - 2 mS/cm durchgeführt wird.

5. Verfahren nach einem der Ansprüche 1 bis 4, **dadurch gekennzeichnet, dass** zwischen den Elektroden der Elektroporationsvorrichtung eine Potentialdifferenz von 50 - 300 kV, bevorzugt 200 - 280 kV angelegt wird.

6. Verfahren nach einem der Ansprüche 1 bis 5, **dadurch gekennzeichnet, dass** zwischen den Elektroden der Elektroporationsvorrichtung eine Stromstärke von 2.000 bis 7.000 A eingestellt wird.

7. Verfahren nach einem der Ansprüche 1 bis 6, **dadurch gekennzeichnet, dass** die Stromdichte in der Reaktionszone der Elektroporationsvorrichtung 50 - 450 kA/m², bevorzugt 100 - 200 kA/m², beträgt.

8. Verfahren nach einem der Ansprüche 1 bis 7, **dadurch gekennzeichnet, dass** die Elektroporation mit einer Impulsfrequenz von 1 bis 30 Hz, bevorzugt 15 - 25 Hz, durchgeführt wird.

9. Verfahren nach einem der Ansprüche 1 bis 8, **dadurch gekennzeichnet, dass** die Pulsdauer der gepulsten elektrischen Energie von 1 - 15 µsec, bevorzugt 2 - 6 µec aufweist.

10. Verfahren nach einem der Ansprüche 1 bis 9, **dadurch gekennzeichnet, dass** die Elektroporation unter einer spezifischen Energieeinleitung von 3-10 kJ/kg Wurzelknollen von Solanum tuberosum, bevorzugt 5-7 kJ/kg Wurzelknollen von Solanum tuberosum, durchgeführt wird.

11. Verfahren nach einem der Ansprüche 1 bis 10, **dadurch gekennzeichnet, dass** die Temperatur der Tauchbäder unabhängig voneinander im Bereich von 5°C bis 30°C eingestellt ist.

12. Wurzelknollen von Solanum tuberosum mit verringerter Menge an Acrylamid- und/oder Melanoidin-bildenden Zellinhaltsstoffen, insbesondere Substanzen aus der Gruppe bestehend aus Asparagin, Glucose und Fructose, unter optimaler Erhaltung der festen Zellstruktur und ohne dass eine wesentliche Menge an Stärke durch Waschen aus den Pflanzenzellen entfernt werden kann, herstellbar mittels Elektroporationsverfahren umfassend die Verfahrensschritte
- Bereitstellen der, vorzugsweise gewaschenen und geschälten, Wurzelknollen von Solanum tuberosum,
- irreversible Elektroporation der Wurzelknollen von Solanum tuberosum,
- Erhalten von Wurzelknollen von Solanum tuberosum mit verringerter Menge an Acrylamid- und/oder Melanoidin-bildenden Zellinhaltsstoffen,
- gegebenenfalls Zerkleinern der Wurzelknollen von Solanum tuberosum, und
- gegebenenfalls Waschen der Wurzelknollen von Solanum tuberosum, wobei die Wurzelknollen in mindestens ein oder mehrere Tauchbäder transportiert und dort gewaschen werden, wobei das mindestens eine Tauchbad vorzugsweise im Gegenstrom betrieben wird,
wobei der Trockensubstanzverlust, der beim Waschen der Wurzelknollen in den Tauchbädern auftritt, 7 Gew.-% oder weniger beträgt,
- und gegebenenfalls Weiterverarbeiten der zerkleinerten und gewaschenen Wurzelknollen von Solanum tuberosum.

13. Wurzelknollen von Solanum tuberosum nach Anspruch 12, **dadurch gekennzeichnet, dass** die Elektroporation in einem Wasserbad mit einer spezifischen Leitfähigkeit von 0,5 - 5 mS/cm, bevorzugt 1 - 2 mS/cm durchgeführt wird.

14. Wurzelknollen von Solanum tuberosum nach Anspruch 12 oder 13, **dadurch gekennzeichnet, dass** zwischen den Elektroden der Elektroporationsvorrichtung eine Potentialdifferenz von 50 - 300 kV, bevorzugt 200 - 280 kV angelegt wird.

15. Wurzelknollen von Solanum tuberosum nach einem der Ansprüche 12 bis 14, **dadurch gekennzeichnet, dass** zwischen den Elektroden der Elektroporationsvorrichtung eine Stromstärke von 2.000 bis 7.000 A eingestellt wird.

16. Wurzelknollen von Solanum tuberosum nach einem der Ansprüche 12 bis 15, **dadurch gekennzeichnet, dass** die Stromdichte in der Reaktionszone der Elektroporationsvorrichtung 50 - 450 kA/m², bevorzugt 100 - 200 kA/m², beträgt.

17. Wurzelknollen von Solanum tuberosum nach einem der Ansprüche 12 bis 16, **dadurch gekennzeichnet, dass** die Elektroporation mit einer Impulsfrequenz von 1 bis 30 Hz, bevorzugt 15 - 25 Hz, durchgeführt wird.

18. Wurzelknollen von Solanum tuberosum nach einem der Ansprüche 12 bis 17, **dadurch gekennzeichnet, dass** die Pulsdauer der gepulsten elektrischen Energie von 1 - 15 µsec, bevorzugt 2 - 6 µsec aufweist.

19. Wurzelknollen von Solanum tuberosum nach einem der Ansprüche 12 bis 18, **dadurch gekennzeichnet, dass** die Elektroporation unter einer spezifischen Energieeinleitung von 3-10 kJ/kg Wurzelknollen von Solanum tuberosum, bevorzugt 5-7 kJ/kg Wurzelknollen von Solanum tuberosum, durchgeführt wird.

20. Wurzelknollen von Solanum tuberosum nach einem der Ansprüche 12 bis 19, **dadurch gekennzeichnet, dass** die Temperatur der Tauchbäder unabhängig voneinander im Bereich von 5°C bis 30°C eingestellt ist.

21. Knabberprodukt bzw. Snack bzw. Kartoffelprodukt mit verringertem Gehalt an Acrylamid- und/oder Melanoidin-bildenden Zellinhaltsstoffen, herstellbar aus Wurzelknollen von Solanum tuberosum nach einem der Ansprüche 12 bis 20.

22. Knabberprodukt bzw. Snack bzw. Kartoffelprodukt nach Anspruch 21, mit einem um mindestens 30% reduzierten Acrylamidgehalt, bezogen auf ein Knabberprodukt bzw. einen Snack bzw. ein Kartoffelprodukt, welches bzw. welcher aus pflanzlichem Material der selben Art hergestellt wurde, das zuvor nicht der Elektroporation unterworfen wurde.

23. Vorrichtung zur Durchführung des Verfahrens nach einem oder mehreren der Ansprüche 1 bis 11 und zur Herstellung eines Knabberprodukts bzw. Snacks bzw. Kartoffelprodukts nach Anspruch 21 oder 22, umfassend
- Vorrichtungen zum Transport der Wurzelknollen von Solanum tuberosum (1),
- einen Elektroporationsreaktor (2),
- eine Schneidanlage (3),
- eine Friteuse (5), sowie
- gegebenenfalls mindestens ein Tauchbad (4).

## Claims

1. Process for removing acrylamide and/or melanoidin forming cellular ingredients, in particular substances from the group consisting of asparagine, glucose and fructose, from root tubers of Solanum tuberosum, comprising the process steps of
- providing the root tubers of Solanum tuberosum, preferably washed and peeled,
- irreversible electroporation of the root tubers of Solanum tuberosum,
- obtaining root tubers of Solanum tuberosum having a reduced amount of acrylamide and/or melanoidin forming cellular ingredients,
- optionally, disintegrating the root tubers of Solanum tuberosum, and
- optionally, washing the root tubers of Solanum tuberosum, wherein the root tubers of Solanum tuberosum are transported in at least one or more dipping baths and are washed therein, wherein the at least one dipping bath is operated preferably in a counter flow mode,
wherein the loss of dry substance occurring during the washing of the root tubers of Solanum tuberosum in the dipping baths is 7 wt.% or less,
- and, optionally, further processing of the disintegrated and washed root tubers of Solanum tuberosum, and wherein
- the root tubers of Solanum tuberosum are further processed in further process steps to a nibble product, respectively a snack, respectively a potato product.

2. The process according to claim 1, **characterized in that** the electroporation is carried out in an electroporation reactor for the continuous processing of lumpy products as process goods in a process liquid with electric pulses, consisting of a circular cylindrical metallic drum having a dielectric coating or being entirely made of dielectric material, which is operable rotating about its horizontally placed cylinder axis/rotational axis at 0.1 to 4 revolutions per min, carriers made of dielectric material at the outer jacket wall of the drum, which are attached thereon distributed uniformly over the circumference, a housing made of dielectric material surrounding with its reactor wall the drum and its carriers in a contact-free but equally spaced manner except for an open area located above the rotational axis, a degasification zone, a reaction zone in the gap between the drum and the reactor wall of the housing, as well as a feeding zone and a discharge zone through which the carriers pass, a process goods supply device which serves as product submission at a constant fill level and which autonomously feeds in the lumpy process goods by the rotational movement of the circular cylindrical drum tangentially in relation to its surface, a discharge zone designed such that a cutout in the cylindrical reactor wall, arranged below the level of the axis of rotation, causes an autonomous discharge of the process goods, the upper edge of the cutout in the cylindrical reactor wall simultaneously serves as effluent weir for the process liquid, the overflowing process liquid is separated from the now processed process goods.

3. The process according to claim 2, **characterized in that** the electroporation is carried out in an electroporation reactor in which at least one pair of electrodes being made of well electroconductive, bare lying material being inert to mechanical and chemical wear is inserted in the lateral walls of the housing of the used electroporation reactor in the area of the reaction zone in the wall of dielectric material, wherein a D.C. voltage being pulsed with a negative or positive potential of up to 300 kV in unipolar mode or +150/-150 kV in bipolar mode is/are connected by connecting at least one unipolar or bipolar electric pulse generator.

4. The process according to any one of claims 1 to 3, **characterized in that** the electroporation is performed in a water bath having a specific conductivity of 0.5 - 5 mS/cm, preferably of 1 - 2 mS/cm.

5. The process according to any one of claims 1 to 4, **characterized in that** a potential difference of 50 - 300 kV, preferably of 200 - 280 kV is applied between the electrodes of the electroporation device.

6. The process according to any one of claims 1 to 5, **characterized in that** a current of 2,000 to 7,000 A is set between the electrodes of the electroporation device.

7. The process according to any one of claims 1 to 6, **characterized in that** the current density in the reaction zone of the electroporation device is 50 - 450 kA/m², preferably 100 - 200 kA/m².

8. The process according to any one of claims 1 to 7, **characterized in that** the electroporation is performed with a pulse frequency from 1 to 30 Hz, preferably 15 - 25 Hz.

9. The process according to any one of claims 1 to 8, **characterized in that** the pulse length of the pulsed electric energy is 1 - 15 µsec, preferably 2 - 6 µsec.

10. The process according to any one of claims 1 to 9, **characterized in that** the electroporation is performed at a specific energy input of 3 - 10 kJ/kg root tubers of Solanum tuberosum, preferably 5 - 7 kJ/kg root tubers of Solanum tuberosum.

11. The process according to any one of claims 1 to 10, **characterized in that** the temperature of the dipping baths is set independently from each other in the range of 5 °C to 30 °C.

12. Root tubers of Solanum tuberosum having reduced amount of acrylamide and/or melanoidin forming cellular ingredients, in particular substances from the group consisting of asparagine, glucose and fructose, by optimally maintaining the firm cell structure and without enabling to remove a considerable amount of starch from the plant cells by washing, producible by an electroporation process comprising the process steps of
- providing the root tubers of Solanum tuberosum, preferably washed and peeled,
- irreversible electroporation of the root tubers of Solanum tuberosum,
- obtaining root tubers of Solanum tuberosum having a reduced amount of acrylamide and/or melanoidin forming cellular ingredients,
- optionally, disintegrating the root tubers of Solanum tuberosum, and
- optionally, washing the root tubers of Solanum tuberosum, wherein the root tubers are transported in at least one or more dipping baths and are washed therein, wherein the at least one dipping bath is operated preferably in a counter flow mode,
wherein the loss of dry substance occurring during the washing of the root tubers in the dipping baths is 7 wt.% or less,
- and, optionally, further processing of the disintegrated und washed root tubers of Solanum tuberosum.

13. The root tubers of Solanum tuberosum according to claim 12, **characterized in that** the electroporation is performed in a water bath having a specific conductivity of 0.5 - 5 mS/cm, preferably of 1 - 2 mS/cm.

14. The root tubers of Solanum tuberosum according to claim 12 or 13, **characterized in that** a potential difference of 50 - 300 kV, preferably of 200 - 280 kV is applied between the electrodes of the electroporation device.

15. The root tubers of Solanum tuberosum according to any one of claims 12 to 14, **characterized in that** a current of 2,000 to 7,000 A is set between the electrodes of the electroporation device.

16. The root tubers of Solanum tuberosum according to any one of claims 12 to 15, **characterized in that** the current density in the reaction zone of the electroporation device is 50 - 450 kA/m², preferably 100 - 200 kA/m².

17. The root tubers of Solanum tuberosum according to any one of claims 12 to 16, **characterized in that** the electroporation is performed with a pulse frequency from 1 to 30 Hz, preferably 15 - 25 Hz.

18. The root tubers of Solanum tuberosum according to any one of claims 12 to 17, **characterized in that** the pulse length of the pulsed electric energy is 1 - 15 µsec, preferably 2 - 6 µsec.

19. The root tubers of Solanum tuberosum according to any one of claims 12 to 18, **characterized in that** the electroporation is performed at a specific energy input of 3 - 10 kJ/kg root tubers of Solanum tuberosum, preferably 5 - 7 kJ/kg root tubers of Solanum tuberosum.

20. The root tubers of Solanum tuberosum according to any one of claims 12 to 19, **characterized in that** the temperature of the dipping baths is set independently from each other in the range of 5 °C to 30 °C.

21. Nibble product, respectively snack, respectively potato product having a reduced content of acrylamide and/or melanoidin forming cellular ingredients, producible from root tubers of Solanum tuberosum according to any one of claims 12 to 20.

22. The nibble product, respectively snack, respectively potato product according to claim 21 having an acrylamide content being reduced of at least 30 % in relation to a nibble product, respectively a snack, respectively a potato product which is produced from plant material of the same species which has not been subjected to the electroporation before.

23. Device for conducting the process according to one or more of the claims 1 to 11 and for producing a nibble product, respectively a snack, respectively a potato product according to claim 21 or 22, comprising
- devices for transporting the root tubers of Solanum tuberosum (1),
- an electroporation reactor (2),
- a cutting equipment (3),
- a fryer (5), as well as,
- optionally, at least one dipping bath (4).

## Revendications

1. Procédé pour retirer des matières cellulaires formant des acrylamides et/ou de la mélanoidine, en particulier des substances du groupe formé par l'asparagine, le glucose et le fructose, les bulbes de Solanum tuberosum, comprenant les étapes de procédé :
- préparation des bulbes de Solanum tuberosum de préférence lavés et pelés,
- l'électroporation irréversible des bulbes de Solanum tuberosum,
- l'obtention de bulbes de Solanum tuberosum ayant une quantité réduite de matières cellulaires formant des acrylamides et/ou de la mélanoidine,
- éventuellement broyage des bulbes de Solanum tuberosum, et
- éventuellement lavage des bulbes de Solanum tuberosum, les bulbes de Solanum tuberosum étant transportés dans au moins un ou plusieurs bains d'immersion et y étant lavés, ledit au moins un bain d'immersion étant exploité de préférence à contre-courant, la perte de substance sèche, qui se produit lors du lavage des bulbes de Solanum tuberosum dans les bains d'immersion, étant de 7% ou moins,
- et éventuellement la transformation ultérieure des bulbes de Solanum tuberosum broyés et lavés, et
- les bulbes de Solanum tuberosum étant transformés ultérieurement dans des étapes de procédé supplémentaires en un produit de grignotage ou un casse-croûte ou un produit à base de pomme de terre.

2. Procédé selon la revendication 1, **caractérisé en ce que** l'électroporation a lieu dans un réacteur d'électroporation pour le traitement continu par impulsions électriques de produits fragmentaires en tant que charge de processus dans un liquide de traitement, réacteur constitué d'un tambour cylindrique circulaire en métal avec un revêtement diélectrique ou totalement en matière diélectrique, qui est exploitable avec une rotation de 0,1 à 4 tours par minute autour de son axe de cylindre/axe de rotation se trouvant à l'horizontale, d'éléments d'entraînement en matière diélectrique sur la paroi d'enveloppe externe du tambour, qui sont appliqués sur celle-ci de façon régulièrement distribuée autour de la périphérie, d'un boîtier en matière diélectrique, qui avec sa paroi de réacteur entoure le tambour avec ses éléments d'entraînement sans contact mais de façon équidistante jusqu'à une zone ouverte se trouvant au-dessus de l'axe de rotation, d'une zone de dégazage, d'une zone de réaction dans l'interstice entre le tambour et la paroi de réacteur du boîtier, ainsi que d'une zone d'amenée et d'une zone d'évacuation qui sont parcourues par les éléments d'entraînement, d'un dispositif pour le chargement de la charge de processus, qui sert de modèle de produit pour un niveau de remplissage constant, et qui recueille par lui-même la charge de processus fragmentaire par le mouvement de rotation du tambour cylindrique circulaire tangentiellement à sa surface, d'une zone d'évacuation, qui est formée de telle sorte qu'une section dans la paroi cylindrique de réacteur, se trouvant sous le niveau de l'axe de rotation, provoque une évacuation spontanée de la charge de processus, que le bord supérieur de la section dans la paroi de réacteur cylindrique sert simultanément de déversoir pour le liquide de traitement, le liquide de traitement déversé étant séparé de la charge de processus présentement traitée.

3. Procédé selon la revendication 2, **caractérisé en ce que** l'électroporation a lieu dans un réacteur d'électroporation, dans lequel au moins une paire d'électrodes constituées d'une paire d'électrodes bonnes conductrices de l'électricité, dénudées et fabriquées en un matériau inerte envers l'usure mécanique et chimique, est encastrée dans les parois latérales du boîtier du réacteur d'électroporation employé, dans la région de la zone de réaction dans la paroi en matière diélectrique, où une tension continue pulsée avec un potentiel positif ou négatif allant jusqu'à 300 kV pour une exploitation unipolaire ou +150/-150 kV pour une exploitation bipolaire, est appliquée grâce au raccordement d'au moins un générateur d'impulsions électriques unipolaires ou bipolaires.

4. Procédé selon l'une quelconque des revendications 1 à 3, **caractérisé en ce que** l'électroporation est réalisée dans un bain d'eau avec une conductivité spécifique de 0,5 à 5 mS/cm, de préférence 1 à 2 mS/cm.

5. Procédé selon l'une quelconque des revendications 1 à 4, **caractérisé en ce qu'**une différence de potentiel de 50 à 300 kV, de préférence de 200 à 280 kV est appliquée entre les électrodes du dispositif d'électroporation.

6. Procédé selon l'une quelconque des revendications 1 à 5, **caractérisé en ce qu'**une intensité de courant de 2 000 à 7 000 A est ajustée entre les électrodes du dispositif d'électroporation.

7. Procédé selon l'une quelconque des revendications 1 à 6, **caractérisé en ce que** la densité de courant dans la zone de réaction du dispositif d'électroporation est de 50 à 450 kA/m², de préférence de 100 à 200 kA/m².

8. Procédé selon l'une quelconque des revendications 1 à 7, **caractérisé en ce que** l'électroporation se réalise avec une fréquence d'impulsion de 1 à 30 Hz, de préférence de 15 à 25 Hz.

9. Procédé selon l'une quelconque des revendications 1 à 8, **caractérisé en ce que** la durée d'impulsion de l'énergie électrique pulsée est de 1 à 15 µs, de préférence de 2 à 6 µs.

10. Procédé selon l'une quelconque des revendications 1 à 9, **caractérisé en ce que** l'électroporation est réalisée avec une introduction d'énergie spécifique de 3 à 10 kJ/kg de bulbes de Solanum tuberosum, de préférence 5 à 7 kJ/kg de bulbes de Solanum tuberosum.

11. Procédé selon l'une quelconque des revendications 1 à 10, **caractérisé en ce que** la température des bains d'immersion est ajustée indépendamment pour chaque bain d'immersion dans la plage de 5°C à 30°C.

12. Bulbes de Solanum tuberosum avec une quantité réduite de matières cellulaires formant de l'acrylamide et/ou de la mélanoidine, en particulier substances issues du groupe formé par l'asparagine, le glucose et le fructose, avec conservation optimale de la structure cellulaire solide et sans qu'une quantité substantielle d'amidon ne puisse être éliminée des cellules végétales par lavage, pouvant être préparée au moyen d'un procédé à électroporation comprenant les étapes de procédé
- préparation des bulbes de Solanum tuberosum de préférence lavés et pelés,
- l'électroporation irréversible des bulbes de Solanum tuberosum,
- l'obtention de bulbes de Solanum tuberosum ayant une quantité réduite de matières cellulaires formant des acrylamides et/ou de la mélanoidine,
- éventuellement broyage des bulbes de Solanum tuberosum, et
- éventuellement lavage des bulbes de Solanum tuberosum, les bulbes de Solanum tuberosum étant transportés dans au moins un ou plusieurs bains d'immersion et y étant lavés, ledit au moins un bain d'immersion étant exploité de préférence à contre-courant, la perte de substance sèche, qui se produit lors du lavage des bulbes de Solanum tuberosum dans les bains d'immersion, étant de 7% ou moins,
- et éventuellement la transformation ultérieure des bulbes de Solanum tuberosum broyés et lavés.

13. Bulbes de Solanum tuberosum selon la revendication 12, **caractérisés en ce que** l'électroporation est réalisée dans un bain d'eau avec une conductivité spécifique de 0,5 à 5 mS/cm, de préférence 1 à 2 mS/cm.

14. Bulbes de Solanum tuberosum selon la revendication 12 ou 13, **caractérisés en ce qu'**une différence de potentiel de 50 à 300 kV, de préférence de 200 à 280 kV est appliquée entre les électrodes du dispositif d'électroporation.

15. Bulbes de Solanum tuberosum selon l'une des revendications 12 à 14, **caractérisés en ce qu'**une intensité de courant de 2 000 à 7 000 A est ajustée entre les électrodes du dispositif d'électroporation.

16. Bulbes de Solanum tuberosum selon l'une des revendications 12 à 15, **caractérisés en ce que** la densité de courant dans la zone de réaction du dispositif d'électroporation est de 50 à 450 kA/m², de préférence de 100 à 200 kA/m².

17. Bulbes de Solanum tuberosum selon l'une des revendications 12 à 16, **caractérisés en ce que** l'électroporation se réalise avec une fréquence d'impulsion de 1 à 30 Hz, de préférence de 15 à 25 Hz.

18. Bulbes de Solanum tuberosum selon l'une des revendications 12 à 17, **caractérisés en ce que** la durée d'impulsion de l'énergie électrique pulsée est de 1 à 15 µs, de préférence de 2 à 6 µs.

19. Bulbes de Solanum tuberosum selon l'une des revendications 12 à 18, **caractérisés en ce que** l'électroporation est réalisée avec une introduction d'énergie spécifique de 3 à 10 kJ/kg de bulbes de Solanum tuberosum, de préférence 5 à 7 kJ/kg de bulbes de Solanum tuberosum.

20. Bulbes de Solanum tuberosum selon l'une des revendications 12 à 19, **caractérisés en ce que** la température des bains d'immersion est ajustée indépendamment pour chaque bain d'immersion dans la plage de 5°C à 30°C.

21. Produit de grignotage ou casse-croûte ou produit à base de pomme de terre ayant une teneur réduite en matières cellulaires formant de l'acrylamide et/ou de la mélanoidine, pouvant être préparés à partir de bulbes de Solanum tuberosum selon l'une des revendications 12 à 20.

22. Produit de grignotage ou casse-croûte ou produit à base de pomme de terre selon la revendication 21, ayant une teneur en acrylamide au moins réduite de 30%, par rapport à un produit de grignotage ou casse-croûte ou produit à base de pomme de terre, qui a été produit à partir de matière végétale du même type, qui n'a pas été soumis au préalable à l'électroporation.

23. Dispositif pour réaliser le procédé selon l'une ou plusieurs des revendications 1 à 11 et pour préparer un produit de grignotage ou casse-croûte ou produit à base de pomme de terre selon la revendication 21 ou 22, comprenant
- des dispositifs pour transporter les bulbes de Solanum tuberosum (1),
- un réacteur d'électroporation (2),
- une installation de découpe (3),
- une friteuse (5), ainsi que
- éventuellement au moins un bain d'immersion (4).
